# EUROPEAN PATENT APPLICATION

(11) **EP 0 820 920 A1**
(43) Date of publication of application: **28.01.1998**
(21) Application number: 97305604.7
(22) Date of filing: 25.07.1997
(51) Int. Cl.: B62H 3/00

(54) **Locking device**

(30) Priority: 25.07.1996 GB 9615675
(71) Applicant: Gardner, Kevin Clyde, Saltash, Nr Plymouth PL12 5AB (GB)
(72) Inventor: Gardner, Kevin Clyde, Saltash, Nr Plymouth PL12 5AB (GB)
(74) Representative: Harrison, Ivor Stanley

(57) **Abstract**

A locking device (1) particularly for a parked two-wheel vehicle, is described. The device includes a plate (10) attachable to the ground in use, a locking element (11) attached to the plate (10) and a locking mechanism enclosed by the plate, whereby in use at least one wheel of a two-wheeled vehicle may be located on the plate and the locking element (11) passed through a part of the vehicle into engagement with the locking mechanism. Optionally, the device further includes a locker.

## Description

The present invention relates to a locking device. More particularly, this invention relates to a locking device for a parked two-wheeled vehicle such as a motorcycle or a bicycle.

Locking devices for such vehicles are known and generally comprise a chain (which may be coated) and a padlock or a so-called D-lock, which devices are used to secure one wheel of the vehicle to a part of the vehicle body thus preventing the vehicle from being moved along the ground. However, vehicles locked with these devices can still be stolen either by cutting through the chain, padlock or D-lock with bolt cutters and the like or by physically lifting the vehicle and removing it in, for example, a van. In general, it is the padlock or other locking mechanism which is the most vulnerable part of known locking devices.

To prevent physical removal of the vehicle, the use of anchors, embedded in the ground, has been proposed about which anchors the locking device may be passed to secure the vehicle to the anchor. However, the use of anchors still relies on the use of chains and D-locks or a simple padlock and the problem of these being cut to release the vehicle still remains.

It is therefore an object of the present invention to provide a locking device for a two-wheeled vehicle which does not rely on a padlock or other exposed locking mechanism for the security of the vehicle.

Accordingly, the invention provides a locking device particularly for a parked, two-wheeled vehicle, the device including a plate attachable to the ground in use, a locking element attached to the plate and a locking mechanism shielded by the plate, whereby in use at least one wheel of the two-wheeled vehicle may be located on the plate and the locking element passed through a part of the vehicle into engagement with the locking mechanism.

Preferably, the locking element comprises a staple pivotably or rotatably movable from a recessed position within or beneath the plate to the locking position. More than one locking element may be provided to pass through one or both wheels of the vehicle. Alternatively, particularly where the front wheel of the vehicle is being secured, the locking element may pass between the wheel and the forks over the hub of the wheel. Whereas several locking elements may be provided for optimal secure parking of the vehicle, configured so as to secure different points on the vehicle, for example one element for passing through the rear wheel and two elements for passing between the front forks, one on each side of the front wheel, generally one or not more than two elements would be provided for locking one or both wheels of the vehicle.

For convenience, the description which follows will make reference to a single locking element and single locking mechanism but it is not intended that the invention be so limited.

The locking mechanism enclosed by the plate may be contained within a housing integral with the plate; the plate may constitute the base or the roof of the housing. If the plate constitutes the roof of the housing, the housing may be accommodated in use in a recess in the ground, the plate being substantially flush with the ground surface. The housing may extend under substantially the entire area of the plate and may also accommodate the locking element in the recessed or non-use position. In such an embodiment, the housing may project partially or completely above the ground, the plate being optionally provided with ramps to facilitate access thereto of a wheel of the vehicle.

In one embodiment of the invention, the plate is resiliently mounted on a box-like structure and the weight of the vehicle on the plate depresses the plate releasing the locking element for use.

Preferably, the lock engaging end of the locking element is profiled to engage with a tumbler in the locking mechanism. Alternatively, the lock-engaging end of the locking element may comprise the male part and the locking mechanism the female part of a mating assembly, the male part being inserted into the female part and releasably held in place therein.

The locking mechanism may be key-, coin-, token- or card-operable and may be associated with a timer, the lock releasing the locking element after a predetermined time has elapsed. Alternatively, the engaging of the lock may initiate a timer, sufficient payment for the elapsed time releasing the lock. The keys or other cashless operating means may be issued from a vending machine.

According to a second aspect of the invention, the locking device fruther includes a storage locker mounted on the plate. Accessories such as helmets and protective clothing may be stored in the locker while the vehicle is parked. The locker may be locked by the same key or other operating means as the locking mechanism for the locking element. Preferably, the door of the locker opens over the plate and the disposition of the locking element and locking mechanism is such that, once the accessories are safely stowed in the locker, the locked vehicle abuts the door of the locker and prevents opening thereof.

The locker and/or the locking mechanism may be alarmed to deter tampering.

The plate may be attached to the ground by, for example, the use of security fasteners which operate only in the engaging direction. Alternatively, the plate may be secured to the ground by embedding in concrete. As an additional obstacle to theft of the vehicle, particularly when the vehicle is a motor-cycle, the weight of the vehicle on the plate impedes the removal of the plate from the ground.

Preferably, the attachment point of the locking element to the plate is sufficiently snug-fitting to prevent bolt-cutters being used to cut the locking element or the mounting at the attachment point. Alternatively, the attachment point may be below the plane of the plate, the element passing through an aperture in the plate.

The locking element and the plate are preferably made from a material, for example hardened steel, which is resistant to cutting. The locking element may be a substantially rigid staple or may be sufficiently flexible to allow some deformation to facilitate its passage through the wheel or other part of the vehicle. Flexibility may be provided by the provision of joints in the element, preferably tamper resistant joints, or by the use of, for example, steel cable with a helically wound steel cover.

Arrays of locking devices, optionally including lockers, may be provided as a single unit for installation in, for example, commercial car parks. Preferably, the devices in such arrays are coin-operated.

Embodiments of the invention will now be described, by way of example only, with reference to the appended drawings, of which:
Figure 1 is a schematic representation of a locking device according to a first aspect of the invention;
Figure 2 is a schematic representation of a locking device according to a second aspect of the invention;
Figure 3 is a schematic representation of how a wheel may be locked in position; and
Figure 4 shows schematically how the wheel of the vehicle may be locked between the forks.

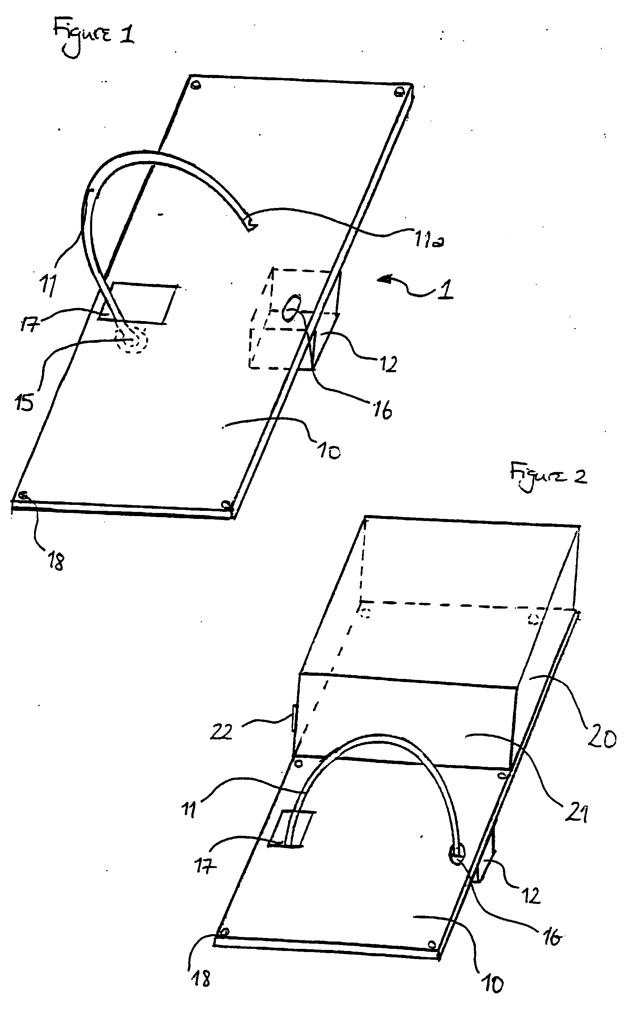

With reference initially to Figure 1, a locking device, generally indicated 1, comprises a plate 10 and a staple 11. The staple is pivotably mounted on the plate 10 and is shown in the open position, ready for use; in the closed position it is engageable at the outer or distal end 11a with a locking mechanism enclosed within a housing 12 carried below the plate 10 through an aperture 16 formed in the plate. The pivot axis 15 at the proximal end of the staple 11 is also below the plate 10, the proximal end of staple 11 passing through another aperture 17 in the plate 10. Bolts 18 attach the plate 10 to the ground.

Figure 2 shows a second embodiment of the invention, where the device 1 is provided with a locker 20. The locker 20 is integral with the plate 10 and includes a door 21 which is hinged at side 22 whereby its travel on opening is over the plate 10 such that, in use, a wheel of a parked vehicle locked by staple 11 abuts the door 21 of the locker 20 and impedes its opening.

The locking mechanism in the housing 12 comprises a tumbler bolt engageable with the profiled distal end 11a of the staple 11. The tumbler may be activated by a motor connected to a timer device (not shown) activated by coins or payment cards. The same timer may operate the lock of the locker 20.

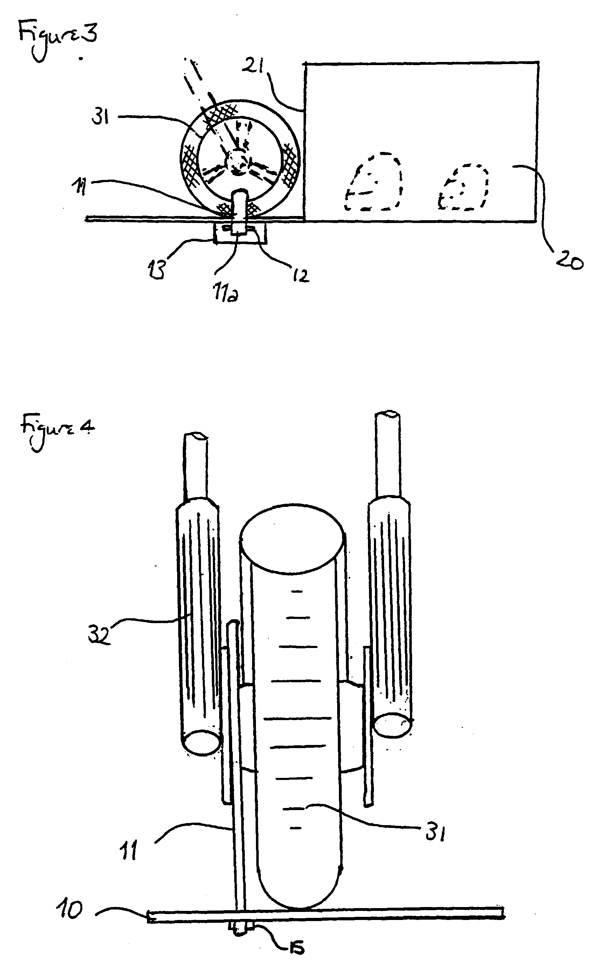

In use, accessories are stored in the locker 20 and the door 21 is closed. A vehicle is wheeled onto the plate 10 such that one wheel 31 abuts door 21 (Figure 3). Staple 11 is pivoted and the end 11a is passed through wheel 31 into aperture 16 and into locking housing 12. Staples 11 may (Figure 4) be passed through the vehicle forks 32 on one or both sides of wheel 31. The locking mechanism is locked and the vehicle may be left securely parked.

## Claims

1. A locking device particularly for a parked two-wheeled vehicle, the device including a plate attachable to the ground in use, a locking element attached to the plate and a locking mechanism shielded by the plate, whereby in use at least one wheel of a two-wheeled vehicle may be located on the plate and the locking. element passed through a part of the vehicle into engagement with the locking mechanism.

2. A locking device according to claim 1, in which the locking element comprises a staple pivotably or rotatably movable from a recessed position within or beneath the plate to the locking position.

3. A locking device according to claim 1 or claim 2, in which two or more locking elements are provided.

4. A locking device according to any preceding claim, in which the or each locking element is configured to pass between the wheel and the forks of the vehicle, over the hub of the wheel.

5. A locking device according to any preceding claim, in which the plate constitutes the roof of a housing which contains the locking mechanism.

6. A locking device according to claim 5, in which the housing accommodates the locking element in a recessed or non-use position.

7. A locking device according to any preceding claim, in which the plate is further provided with ramps to facilitate access thereto of a wheel of the vehicle.

8. A locking device according to any one of claims 5 to 7, in which the plate is resiliently mounted on the walls of the housing and is operatively connected with the locking mechanism, whereby in use the weight of the vehicle on the plate depresses the plate releasing the locking element.

9. A locking device according to any preceding claim, in which the locking mechanism is associated with a timer, the locking mechanism releasing the locking element after a predetermined time has elapsed.

10. A locking device according to any preceding claim, further comprising a storage locker mounted on the plate.

11. A locking device according to claim 10, in which the door of the locker opens over the plate and the disposition of the locking element of the locking mechanism is such that the locked vehicle abuts the door of the locker and prevents opening thereof.

12. A locking device according to any preceding claim, in which the attachment point of the locking element to the plate is below the plane of the plate, the element passing through an aperture in the plate.

13. A locking device according to any preceding claim, in which the locking element is flexible to allow some deformation to facilitate its passage through the wheel or other part of the vehicle.

14. A locking device according to claim 13, in which the locking element comprises portions attached together with tamper-resistant joints.

15. An array of locking devices according to any preceding claim provided as a single unit for installation in a commercial car park.

16. A locking device substantially as hereinbefore described with reference to and as illustrated by any of Figures 1 to 4 of the accompanying drawings.

17. An array of locking devices substantially as hereinbefore described with reference to and as illustrated in any of Figures 1 to 4 of the accompanying drawings.
